# EUROPEAN PATENT APPLICATION

(11) **EP 2 570 934 A1**
(43) Date of publication of application: **20.03.2013**
(21) Application number: 12184717.2
(22) Date of filing: 17.09.2012
(51) Int. Cl.: G06F 17/27, G06F 17/22, H04L 12/58, G06Q 10/00

(54) **A method for generating a plurality of electronic messages and associated equipment**

(30) Priority: 16.09.2011 FR 1102818
(71) Applicant: Alcatel Lucent, 75007 Paris (FR)
(72) Inventor: Toubiana, Vincent, 91620 Nozay (FR); Christophe, Benoit, 91620 Nozay (FR)
(74) Representative: Mouney, Jérôme

(57) **Abstract**

The embodiments of the present invention relate to A method for generating a plurality of electronic messages which may be sent to a plurality of contacts of a user of at least one platform within a communication network, said method comprising the following steps:
- at least two sets of user contacts are defined within a database,
- at least two different linguistic styles are associated with said two sets of contacts,
- at least two vocabulary synonym lists, associated with said at least two different linguistic styles, are established, and are saved in the database, during the composing or sending by the user, of an initial electronic message intended for at least two contacts belonging to at least two distinct sets of contacts,
- the vocabulary of said initial electronic message which corresponds to the vocabulary of a saved list is detected,
- at least two electronic messages corresponding to two linguistic styles intended for the contacts of said at least two distinct sets of contacts by replacing the initial electronic message's detected vocabulary with a synonymous vocabulary taken from a saved list.

## Description

The embodiments of the present invention relate to the domain of communication networks, and more specifically, mass communications on those networks' platforms.

"Platform" refers to the set of applications that make it possible to bring a set of users into communication, such as, for example, electronic messaging, instant messaging, and social networks.

Mass communications correspond to communications that come from one person or user and are intended for a plurality of people or users.

Thus, the platforms make it possible to send a message to a plurality of contacts and therefore to carry out mass communications.

However, during a mass communication, all of the recipient contacts of the message receive the same message, regardless of the social relationship that exists between the message's sender and the various recipient contacts.

It happens that some contacts may correspond to coworkers while others may correspond to the user's friends or family members.

However, the sender generally does not address all of these contacts in the same way.

Nonetheless, within the context of mass communications, it is difficult if not impossible to adapt a message's style based on the social relationship established with the target of the communication.

This is because either the sender sends a single message to all of his or her contacts, as is the case when posting a message on a social network wall with the understanding that the style being used might not correspond to some of the recipient contacts, or the sender sends a plurality of messages to a limited number of contacts while adopting the various messages' styles based on who the recipients are, which may be long and tedious and limit the benefit of mass communication.

It therefore appears necessary to propose a method that would make it possible to overcome the aforementioned drawbacks of the state of the art and to optimize mass communications on communication networks' platforms.

Thus, the embodiments of the present invention relate to a method for generating a plurality of electronic messages intended to be sent to a plurality of contacts of a user of at least one platform within a communication network, said method comprising the following steps:
- at least two sets of user contacts are defined within a database,
- at least two different linguistic styles are associated with said two sets of contacts,
- at least two vocabulary synonym lists, associated with said at least two different linguistic styles, are established, and are saved in the database, during the composing or sending by the user, of an initial electronic message intended for at least two contacts belonging to at least two distinct sets of contacts,
- the vocabulary of said initial electronic message which corresponds to the vocabulary of a saved list is detected,
- at least two electronic messages corresponding to two linguistic styles intended for the contacts of said at least two distinct sets of contacts by replacing the initial electronic message's detected vocabulary with a synonymous vocabulary taken from a saved list.

According to another embodiment of the present invention, the method further comprises the step in which:
- the semantics of the messages exchanged between the user and his or her plurality of contacts are analyzed using a dedicated application.

According to an additional embodiment of the present invention, the at least two sets of contacts are defined by the user.

According to an additional embodiment of the present invention, the at least two sets of contacts are defined by data extracted from the user's profiles and/or his or her contacts.

According to another embodiment of the present invention, the at least two sets of contacts are defined based on the semantic analysis of the messages exchanged between the user and his or her plurality of contacts.

According to an additional embodiment of the present invention, the at least two linguistic styles associated with said at least two sets of contacts are defined based on the semantic analysis of the messages exchanged between the user and his or her plurality of contacts.

According to an additional embodiment of the present invention, the method further comprises a step in which the step of establishing at least two vocabulary synonym lists associated with said at least two different linguistic styles is carried out based on the semantic analysis of the messages exchanged between the user and his or her plurality of contacts, and comprises the following substeps:
- the vocabularies are extracted based on the semantic analysis of the exchanged messages,
- from the extracted vocabularies, the vocabularies which are not saved within a list are selected,
- using a dedicated application, the synonymous vocabularies of the selected vocabularies are determined that correspond to the linguistic type of at least one other saved list,
- the detected and determined synonymous vocabularies are saved in the corresponding vocabulary lists.

The embodiments of the present invention also pertain to a server for generating at least two synonymous vocabulary lists associated with at least two linguistic styles corresponding to at least two sets of a contacts of a user of at least one platform within a communication network, said server comprising a database for saving the at least two vocabulary lists and at least one processing means for:
- analyzing the semantics of the messages exchanged between the user and his or her plurality of contacts,
- extracting the vocabularies of the exchange messages based on a semantic analysis,
   associating the extracted vocabularies with a linguistic style,
- determining whether the vocabularies are already saved in a vocabulary list of the database's,
- determining at least one synonym from the extracted vocabularies that corresponds to another linguistic style of a list,
- saving the extracted and determined vocabularies in the corresponding vocabulary lists.

According to another embodiment of the present invention, the server further comprises at least one means of processing for:
- extracting data from the user's profiles and/or those of his or her contacts,
- using the extracted data to define the at least two sets of contacts that correspond to at least two linguistic styles.

The embodiments of the present invention also pertain to a communication terminal of a user of at least one platform within a communication network connected to a server and comprising at least one means of processing for:
- detecting, whenever the user composes or sends an initial electronic message intended for at least two contacts who belong to at least two distinct sets of contacts, the vocabularies of said initial electronic message that correspond to vocabularies of a safe vocabulary list within a database,
- generating at least two electronic messages that correspond to the two linguistic styles intended for the contacts of said at least two distinct sets of contacts, replacing the initial electronic message's detected vocabulary with a synonymous vocabulary taken from a list saved in the database.

Other characteristics and benefits of the invention will become apparent from the following description, given with reference to the attached drawings, which by way of a non-limiting example depict one possible embodiment.

In these drawings:
- Figure 1 depicts a block diagram of the various steps of the embodiments of the present invention;
- Figure 2 depicts a diagram of a communication platform's user and a plurality of the user's contacts;
- Figure 3 depicts a diagram of one example of a grouping of the user's contacts into three sets;
- Figure 4 depicts a diagram of the establishment of synonymous vocabulary lists;
- Figure 5 depicts an example of extracting vocabularies from two messages sent to two contacts from two distinct sets;
- Figure 6 depicts a diagram of an association of extracted vocabularies with synonymous vocabularies from a saved list;
- Figure 7 depicts a diagram of two messages generated based on an initial message;

In the following description, generally:
The term "platform" of the communication network corresponds to a social network, email service, or instant messaging service of a communication network such as the Internet, such that messages or texts exchanged between a user of a platform and a contact of the user comprise instant messages, emails, and comments posted on a wall, etc.;
The term "vocabulary" corresponds to a word or a phrase comprising multiple words;

The embodiments of the present invention relates to a method for generating a plurality of electronic message is intended to be sent to a plurality of a contacts of a user of at least one platform within a communication network.

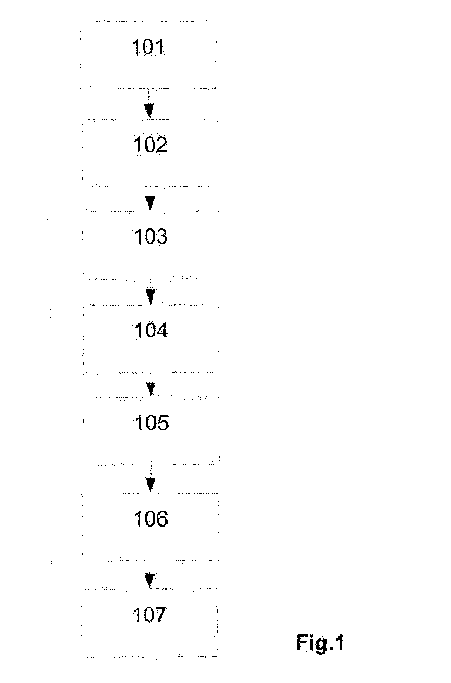

Figure 1 depicts the various steps of one embodiment of the present invention.

The first step 101 pertains to the semantic analysis of messages exchanged between the user and his or her plurality of contacts. This semantic analysis makes it possible to detect, extract, and determine the meaning of the vocabularies used within the exchanged messages. These vocabularies are both words and expressions, such as "good morning" or "how are you?". This analysis is conducted by a dedicated application installed, for example, on a server of the platform.

The second step 102 pertains to the defining of at least two sets or groups of contacts.

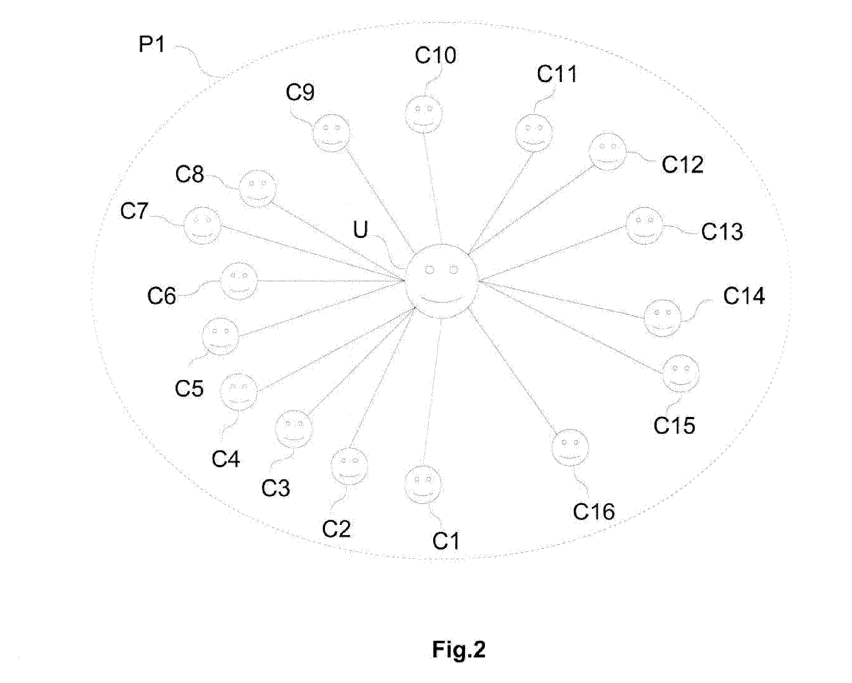

Figure 2 schematically depicts a user U and his or her plurality of contacts Ci where i=1, 2, 3....for a given platform P1, such as a social network. The social relationships that link the user U and his or her contacts Ci may be varied.

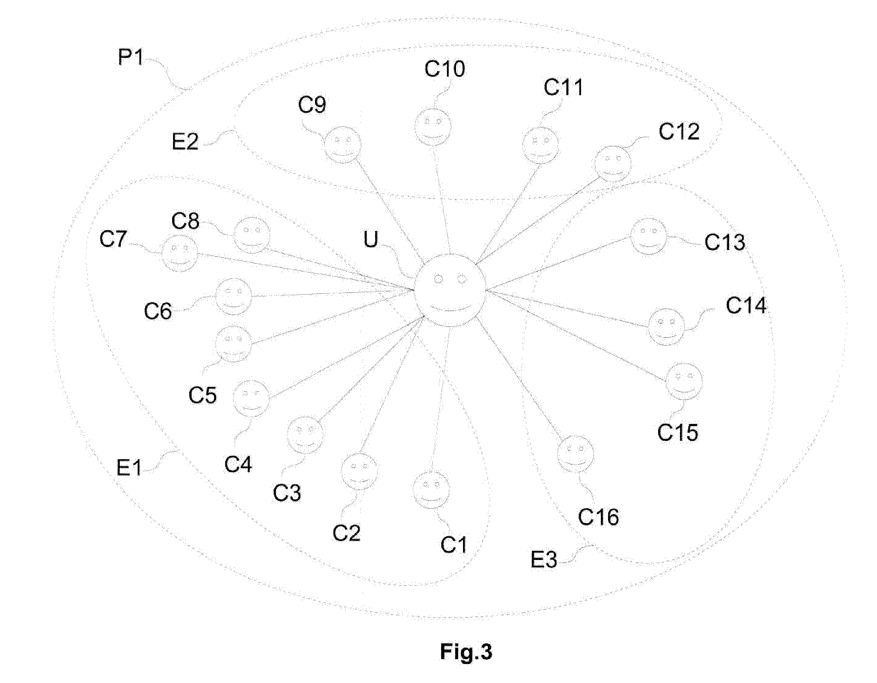

Thus, in step 102, the contacts are grouped by sets of contacts based on the social relationship that they have with the user. The various sets may, for example, correspond to a set of close friends E1, a set of coworkers E2, and a set of distant friends E3 as depicted in Figure 3. However, the sets may also be defined only based on the language used between the user and the contacts, so that the types of social links within a single set might be different but will correspond to a single linguistic style.

The sets or groups of contacts Ei where i=1, 2, 3...may be defined by the user U, by the analysis of messages exchanged between the user U and his or her contacts Ci during the step 101, by the analysis of the user's U profiles and those of his or her contacts, or by a combination of the aforementioned means. For example, a definition of the sets may be carried out by an analysis of the profiles, for example if the profiles of the user U and a contact indicate that they went to the same university at the same time, the contact C1 may be classified in a set of distant friends, then the analysis of the messages exchanged between the user U and the contact C1 may cause the contact C1 to be placed in a set of close friends, then the user U may again move the contact C1 into a set of distant friends. The contact lists that correspond to the different sets are saved in a database assigned to the platform.

The third step 103 pertains to the associating of a linguistic style Si where i=1, 2, 3...with the sets of contacts Ei defined in step 102. For example, the set of close friends E1 may be associated with a style S1 corresponding to a familiar language, the set of coworkers E2 associated with a style S2 corresponding to a polite language, and the set of distant friends E3 associated with a style S3 corresponding to an everyday language. Nonetheless, the styles Si where i=1, 2, 3... associated with the sets do not necessarily correspond to a predefined linguistic type but simply correspond to the vocabularies used by that set's contacts.

The fourth step 104 corresponds to the establishing of vocabulary lists corresponding to each style. These lists may comprise vocabularies taken from another application, for example an online dictionary, or taken from the semantic analysis of step 101 conducted on the messages exchanged between the user U and his or her contacts Ci and are saved in a database of the platform. Thus, whenever a vocabulary is extracted from a message by semantic analysis, it is determined whether that vocabulary is already saved in a vocabulary list of the database. If this is the case, the next extracted vocabulary is processed, and if that vocabulary is not saved in a list, the synonyms of that vocabulary that correspond to the linguistic style of the other vocabulary lists are determined, and the extracted vocabulary and the determined synonyms are saved in the corresponding vocabulary lists in the database. Semantic lists of synonymous vocabularies are thereby constructed. Additionally, the vocabularies may be classified into categories such as, for example, the vocabularies corresponding to the header, the salutations, the body, or the signature of a message. Thus, with each new exchange of messages between the user and his or her contacts, the vocabulary lists are enriched.

The fifth step 105 pertains to the detection of vocabularies corresponding to vocabularies of a list saved in the database when the user composes an electronic message, known here as an initial electronic message, intended for at least two contacts belonging to at least two distinct sets of contacts. To do so, an application linked to the platform compares the vocabularies that are used within the initial message with the vocabularies saved in the vocabulary lists. Additionally, the embodiments of the present invention pertain not only to e-mails composed by the user, but also pre-existing messages, for example one received by the user, then redirect to the user's contacts or automatic messages created by software or an application. In such a case, the detection of vocabularies that correspond to vocabularies of a list saved in the database is done when sending the pre-existing message.

The sixth step 106 pertains to the generating, by a dedicated application of the platform, of at least two electronic messages corresponding to the two linguistic styles intended for the contacts of said at least two distinct sets of contacts by replacing the vocabulary detected in step 105 with a synonymous vocabulary taken from a saved list. Additionally, the message's style may be adapted by the dedicated application based on the linguistic style associated with the message's recipient contacts. Likewise, in the case of a pre-existing message, said pre-existing message is not sent and at least two electronic messages are generated based on said pre-existing message.

The seventh step 107 pertains to the proofreading by the user U of the generated messages. Thus, the messages generated in step 106 are displayed on the terminal of the user U so that the user can proofread and potentially correct the text of the generated messages manually.

The eighth step 108 pertains to the delivery of at least two electronic messages corresponding to the two linguistic styles to the corresponding contacts of said at least two distinct sets of contacts. This step may, for example, be triggered by approval from the user, for example, by clicking on a predetermined button at the end of step 107. Thus, each set of contacts receives a message whose vocabulary is adapted to the social relationship that exists or to the language generally used in this set of contacts.

According to one embodiment of the present invention, the semantic analysis of the step 101 and the establishing of the vocabulary lists of step 104 further comprise the determining of the general subject of a conversation, for example the mood of a contact or his or her opinion on a film and the classification, within the saved lists, of the vocabulary used based on the conversation's general subject. This way, some vocabularies are associated with a particular context and when messages are generated during step 106, the choice of synonymous vocabularies to generate at least two electronic messages corresponding to two linguistic styles is carried out by taking into account the general subject of the initial electronic message, for example, if the initial electronic message pertains to a soccer game and the vocabularies synonymous with the initial message's vocabulary are associated with a general subject that corresponds to soccer or sporting events, then this is the synonymous vocabulary that will preferentially be used to generate the electronic messages.

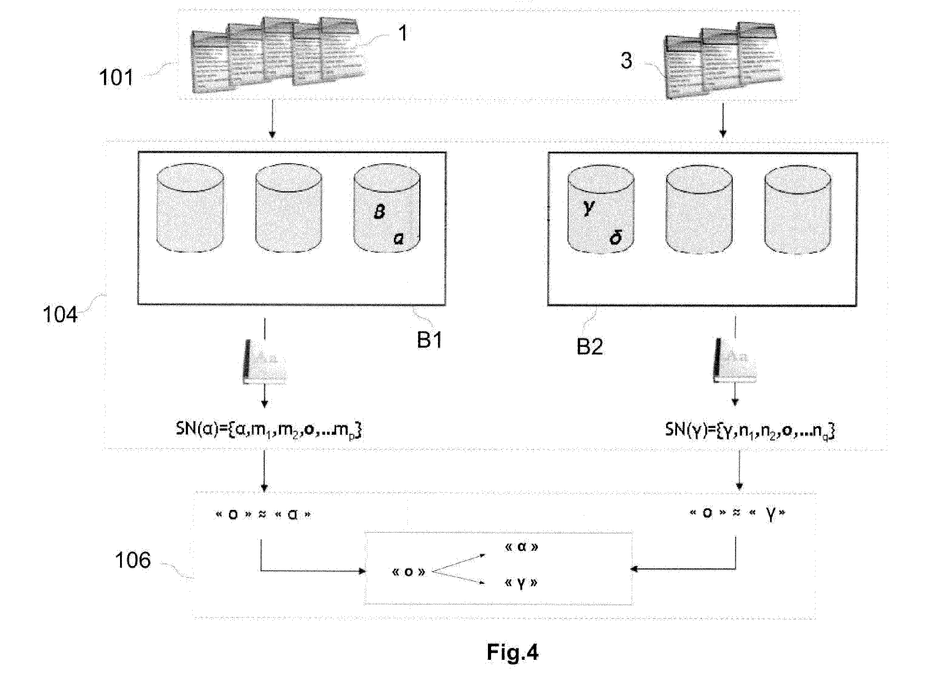

Figure 4 shows the details of some steps of establishing lists of synonyms with two sets of contacts E1 and E3.
The conversations 1 of the set E1 and the conversations 3 of the set E3 are semantically analyzed during step 101 so as to determine the general subject of conversations and extract vocabularies.
The vocabularies, for example α and γ associated with the respective conversations 1 and 3 are then classified and saved in databases B1 and B2 respectively associated with sets E1 and E3, then associations are carried out between the different synonymous vocabularies to associate with each vocabulary a list of synonyms SN, for example, the lists SN(α) and SN(γ) each comprising the vocabulary o.

Thus, if during step 106, the user U uses the vocabulary o n his or her initial electronic message and the general subject of the initial electronic message corresponds to the general subject with which α and γ are associated, then the vocabulary o is replaced by the vocabulary α within the generated electronic message intended for the set E1 and by the vocabulary γ within the generated electronic message intended for the set E3.

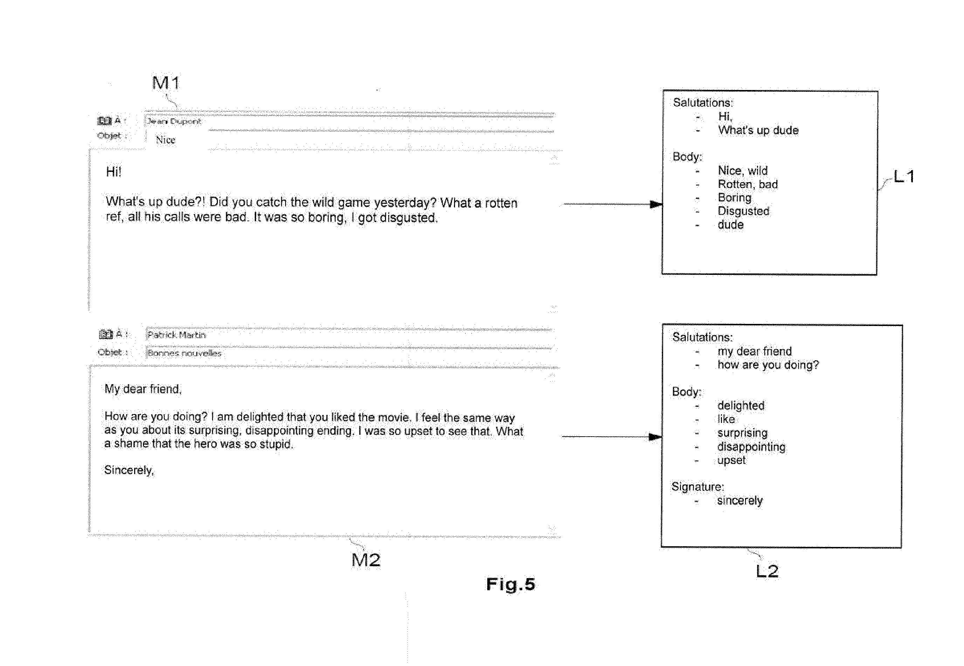

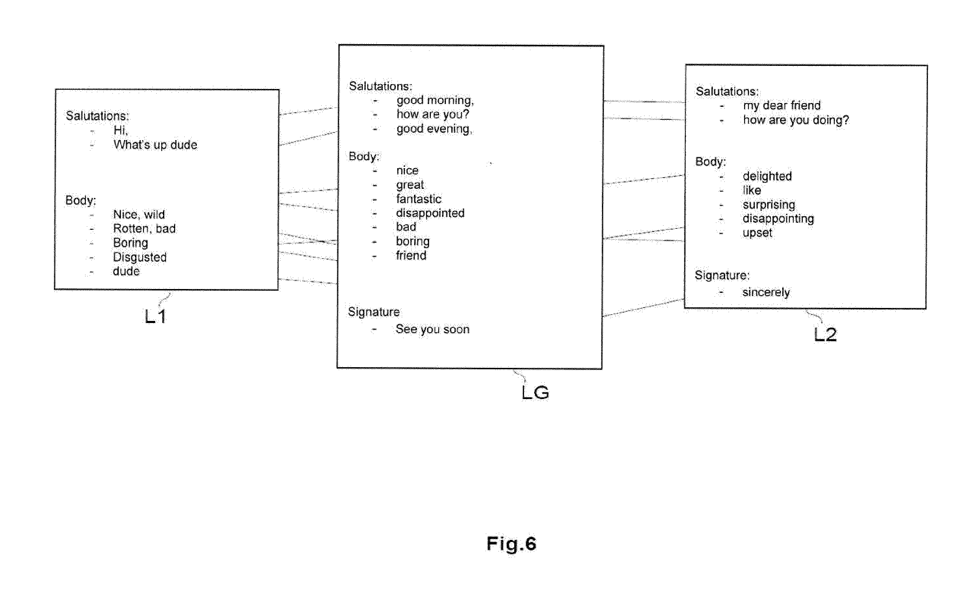

In order to better understand the details of the embodiment of the present invention, an example will now be described based on the messages in Figure 5.
A first message M1 is a message sent to the contact Jean Dupont who is a close friend (corresponding to the set E1) of the user U who is sending the message and whose subject corresponds to last night's game. The writing of this message causes the extraction of the vocabulary list L1 associated with a style S1.
A second message M2 is a message sent to the contact Patrick Martin who is a coworker (corresponding to the set E3) of the user U who is sending a message and whose subject corresponds to an opinion about a movie. The extracting of vocabularies from that message leads to the establishing of the vocabulary list L2 associated with a style S3.
The vocabularies extracted from the lists L1 and L2 are then associated with the synonymous or near-synonymous vocabularies of a general list LG of a database as depicted in Figure 6. The general list LG comprises, for example, the vocabularies taken from a dictionary as well as the vocabularies extracted from preceding messages exchanged by the user U.
This thereby makes it possible to establish a database with the various equivalencies between vocabularies, such as, for example:
Hello [S1]↔Good morning [SG]↔My dear friend [S3]
What's up [S1]↔How's it going? [SG]↔How are you? [S3]

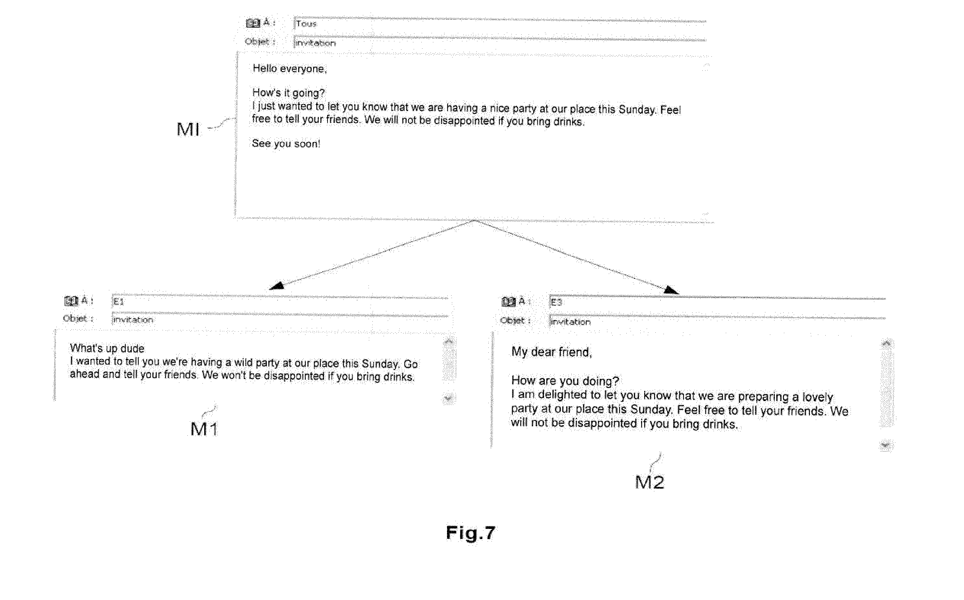

The references between brackets correspond to the style associated with the vocabulary; here, S1 corresponds to a familiar style, SG to a general style, and S3 to a polite style.
Later, when the user U writes a message, corresponding to an initial message MI to all of his or her contacts, two messages M1 and M2, respectively intended for the sets E1 and E3 are then generated by editing the vocabularies of the initial message as described in Figure 7.

Furthermore, the application that makes it possible to generate messages may also adapt formal and familiar forms depending on the style.

According to one embodiment, the message's language may also be taken into account, for example, if the context speaks English, the message may be translated, with the translation taking into account the set in which the contact is located in order to adapt the style of the message translated into English, for example by using "slang" vocabulary if it is a close friend.

Once the two messages have been generated, they are displayed on the user's screen so that that user can proofread them and potentially edit them. The user then triggers the sending of the message M1 to the contacts of the set E1 and the sending of the message M2 to the contacts of the set E3.

The embodiments of the present invention therefore make it possible, during a mass communication to contacts belonging to different sets corresponding to different linguistic styles, to generate, based on a single initial message, a plurality of messages adapted to the plurality of sets of contacts. Thus, this enables the user to save time when writing to all of his or her contacts while guaranteeing that the style used will not offend the various contacts.

## Claims

1. A method for generating a plurality of electronic message is intended to be sent to a plurality of contacts of a user of at least one platform within a communication network, said method comprising the following steps:
- at least two sets of user contacts are defined within a database,
- at least two different linguistic styles are associated with said two sets of contacts,
- at least two vocabulary synonym lists, associated with said at least two different linguistic styles, are established, and are saved in the database, during the composing or sending by the user, of an initial electronic message intended for at least two contacts belonging to at least two distinct sets of contacts,
- the vocabulary of said initial electronic message which corresponds to the vocabulary of a saved list is detected,
- at least two electronic messages corresponding to two linguistic styles intended for the contacts of said at least two distinct sets of contacts by replacing the initial electronic message's detected vocabulary with a synonymous vocabulary taken from a saved list.

2. A method according to one of the preceding claims, further comprising a step in which:
- the semantics of the messages exchanged between the user and his or her plurality of contacts are analyzed using a dedicated application.

3. A method according to claim 1 or 2, wherein the at least two sets of contacts are defined by the user.

4. A method according to one of the preceding claims, wherein the at least two sets of contacts are defined by data extracted from the profiles of the user and/or his or her contacts.

5. A method according to one of the claims 2 to 4, wherein the at least two sets of contacts are defined based on the semantic analysis of the messages exchanged between the user and his or her plurality of contacts.

6. A method according to one of the preceding claims, wherein the at least two linguistic styles associated with said at least two sets of contacts are defined based on the semantic analysis of the messages exchanged between the user and his or her plurality of contacts.

7. A method according to one of the claims, further comprising the step in which the step of establishing at least two synonymous vocabulary lists associated with said at least two different linguistic styles is carried out based on the semantic analysis of the messages exchanged between the user and his or her plurality of contacts, and comprises the following substeps:
- the vocabularies are extracted based on the semantic analysis of the exchanged messages,
- from the extracted vocabularies, the vocabularies which are not saved within a list are selected,
- using a dedicated application, the synonymous vocabularies of the selected vocabularies are determined that correspond to the linguistic type of at least one other saved list,
- the detected and determined synonymous vocabularies are saved in the corresponding vocabulary lists.

8. A server for generating at least two synonymous vocabulary lists associated with at least two linguistic styles corresponding to at least two sets of contacts of a user of at least one platform within a communication network, said server comprising a database for saving the at least two vocabulary lists and at least one means of processing for:
- analyzing the semantics of the messages exchanged between the user and his or her plurality of contacts,
- extracting the vocabularies of the exchange messages based on a semantic analysis,
associating the extracted vocabularies with a linguistic style,
- determining whether the vocabularies are already saved in a vocabulary list of the database's,
- determining at least one synonym from the extracted vocabularies that corresponds to another linguistic style of a list,
- saving the extracted and determined vocabularies in the corresponding vocabulary lists.

9. A server according to claim 8, comprising at least one processing means for:
- extracting data from the user's profiles and/or those of his or her contacts,
- using the extracted data to define the at least two sets of contacts that correspond to at least two linguistic styles.

10. A communication terminal of a user of at least one platform within a communication network connected to a server according to claim 8 or 9 and comprising at least one means of processing for:
- detecting, whenever the user composes or sends an initial electronic message intended for at least two contacts who belong to at least two distinct sets of contacts, the vocabularies of said initial electronic message that correspond to vocabularies of a safe vocabulary list within a database,
- generating at least two electronic messages that correspond to the two linguistic styles intended for the contacts of said at least two distinct sets of contacts, replacing the initial electronic message's detected vocabulary with a synonymous vocabulary taken from a list saved in the database.
